# EUROPEAN PATENT APPLICATION

(11) **EP 2 651 011 A2**
(43) Date of publication of application: **16.10.2013**
(21) Application number: 13162843.0
(22) Date of filing: 09.04.2013
(51) Int. Cl.: H02K 3/52

(54) **On-vehicle rotary electric machine and electric power steering system**

(30) Priority: 09.04.2012 JP 2012088779
(71) Applicant: Hitachi Automotive Systems, Ltd., Hitachinaka-shi Ibaraki 312-8503 (JP)
(72) Inventor: Nakayama, Kenji, Ibaraki, 312-0062 (JP); Kawasaki, Shozo, Ibaraki, 312-0062 (JP); Kanazawa, Hiroshi, Tokyo, 100-8220 (JP); Hamada, Yasunaga, Ibaraki, 312-0062 (JP)
(74) Representative: MERH-IP Matias Erny Reichl Hoffmann

(57) **Abstract**

An electrical motor includes: a cylindrical stator core (12) arranged so as to surround a periphery of a rotor (18) via a space, and having a plurality of teeth (120) formed in an inner periphery thereof; a bobbin (13) installed in each of the plurality of teeth (120); a coil (14) wound around each of the bobbins (13) installed in the teeth (120); a bottomed cylindrical chassis (10) having a bottom faced with one of end portions in the axial direction of the stator core (12), and holding an outer periphery of the stator core; and a busbar mold (100) provided with a busbar terminal (110). An engaging hole (10a) is formed at least in either the bottom (10b) or the busbar mold (100) at a position facing the bobbin (13), and an engaging projection (13a) that engages with the engaging hole (10a) is formed in an opposing part that faces the engaging hole (10a) in the bobbin (13).

## Description

### BACKGROUND OF THE INVENTION

### 1. Field of the Invention

The present invention relates to an on-vehicle rotary electric machine, and an electric power steering system having the same.

### 2. Description of the Related Art

In an on-vehicle rotary electric machine such as an electrical motor for power steering, an inner rotor-type rotary electric machine having a rotor arranged at the center of a stator core held by a chassis is commonly used. Shrink-fit or press-fit is often used to fix the stator core to the chassis.

Due to a weight-saving demand, the chassis of the on-vehicle rotary electric machine is often formed by die-casting of aluminum, while the stator core is formed of a magnetic steel sheet. Therefore, when a temperature of the electrical motor becomes higher than expected, due to a difference in linear expansion coefficient between the chassis and the stator core, there is a problem in that the holding power by interference between the chassis and the stator core is decreased.
As a result, there is a risk that the stator core may be rotated against the chassis.

In view of such a problem, there has been proposed a structure for preventing rotation of a stator core by providing a rotation stopping member between the stator core and a bracket placed on the upper surface of the stator core (see, for example, JP 2011-67056 A).

### SUMMARY OF THE INVENTION

However, a member dedicated for preventing rotation of the stator core is added in the structure according to JP 2011-67056 A, which becomes a factor of cost increase as well as a hindrance for downsizing the electrical motor.

An on-vehicle rotary electric machine according to a first aspect of the present invention includes: a rotor; a cylindrical stator core arranged so as to surround a periphery of the rotor via a space, and having a plurality of teeth formed in an inner periphery thereof; a bobbin installed in each of the plurality of teeth; a stator coil wound around each of the bobbins installed in the teeth; a bottomed cylindrical chassis having a bottom faced with one of end portions in the axial direction of the stator core, and holding an outer periphery of the stator core; and/or a terminal layout board provided with a terminal to which a lead wire of the stator coil is connected, arranged to face the other end portion in the axial direction of the stator core, and fixed to the chassis. A first engaging portion is formed at least in either the bottom or the terminal layout board at a position facing the bobbin, and a second engaging portion that engages with the first engaging portion is formed in an opposing part that faces the first engaging portion in the bobbin.
An on-vehicle rotary electric machine according to a second aspect of the present invention includes: a rotor; a stator core arranged so as to surround a periphery of the rotor via a space, and including a plurality of divided stator cores having a tooth formed in an inner periphery thereof; a bobbin installed in each of the plurality of teeth; a stator coil wound around each of the bobbins installed in the teeth; a bottomed cylindrical chassis having a bottom faced with one of end portions in the axial direction of the stator core, and holding an outer periphery of the stator core; a terminal layout board provided with a terminal to which a lead wire of the stator coil is connected, and arranged to face the other end portion in the axial direction of the stator core; and/or a divided stator core holding ring that integrally holds the plurality of divided stator cores arranged in a ring shape, and is sandwiched between the terminal layout board and the stator core. The terminal layout board is fixed to the chassis so as to sandwich the divided stator core holding ring and the stator core between the bottom of the chassis and the terminal layout board.
An electric power steering system according to a third aspect of the present invention includes: a steering mechanism for transmitting steering operation of a steering wheel to a steered wheel; and the on-vehicle rotary electric machine according to any of the first and second aspects. Steering assist force is given to the steering mechanism by the on-vehicle rotary electric machine.

According to the present invention, the rotation of the stator core against the chassis can be prevented without adding a member dedicated for preventing rotation of the stator core.

### BRIEF DESCRIPTION OF THE DRAWINGS

Fig. 1 is a view illustrating a schematic configuration of an electric power steering having an electrical motor;
Fig. 2 is a sectional view of the electrical motor in an axial direction;
Fig. 3 is a perspective view of a stator core and a rotor;
Fig. 4 is a perspective view illustrating a shape of a bobbin to be installed in a tooth;
Fig. 5 is a perspective view of a chassis sectioned in the axial direction;
Fig. 6 is a perspective view of a busbar mold;
Fig. 7 is a sectional view of the electrical motor, which has been assembled;
Fig. 8 is a perspective view of the bobbin having an engaging hole formed therein;
Fig. 9 is a view of an engaging projection formed on the side of the chassis;
Fig. 10 is a view illustrating a shape of an engaging portion according to a second embodiment;
Fig. 11 is a view of an engaging portion formed in the chassis;
Fig. 12 is a perspective view of the rotor and the stator core;
Fig. 13 is a view illustrating engagement between an engaging portion and an engaging portion;
Figs. 14A and 14B are views of an engaging portion formed in the busbar mold;
Fig. 15 is a view of an engaging projection provided in the chassis;
Fig. 16 is a sectional view illustrating the case where rotation is restrained by a stator fixing ring alone;
Fig. 17 is a view illustrating the case where a bottom of the chassis is formed as a separate part; and Fig. 18 is a view of a thermally caulked portion.

### DESCRIPTION OF THE PREFERRED EMBODIMENTS

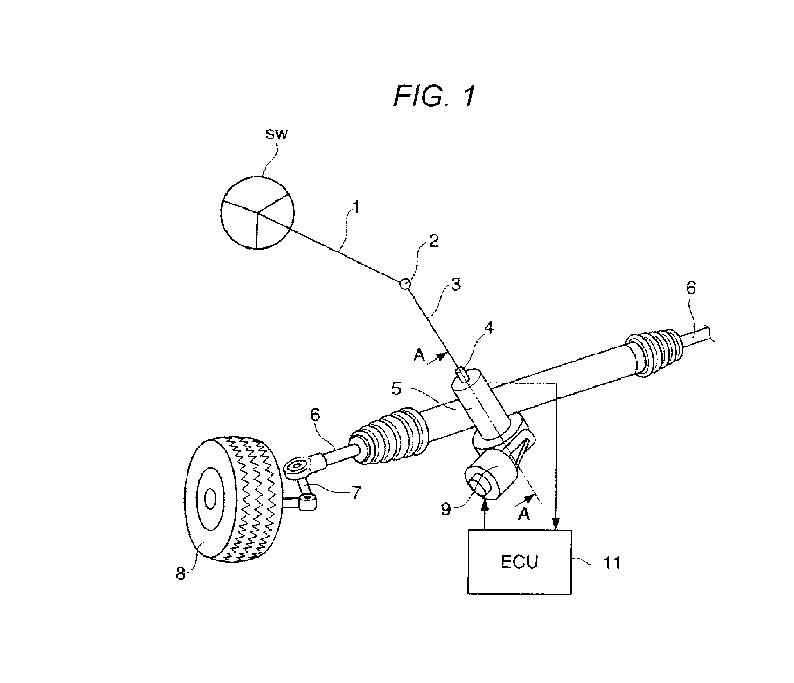

Embodiments for carrying out the present invention are described herein with reference to the drawings. Fig. 1 is a view of an exemplary system to which an on-vehicle rotary electric machine according to the present invention is applied, and illustrating a schematic configuration of an electric power steering system.

As in Fig. 1, a steering shaft 1, which integrally rotates with a steering wheel SW, is coupled with a pinion shaft 4 via a universal joint 2 and an intermediate shaft 3. The pinion shaft 4 is pivotally supported by a chassis 5, which is supported by and fixed to a vehicle body (not shown), and forms a so-called rack-and-pinion type steering gear combined with a rack shaft (not shown) also housed in the chassis 5.

When the steering wheel SW is rotated with the pinion shaft 4, rotary motion of the pinion shaft 4 is converted into linear motion of the rack shaft, and a steered wheel 8 changes direction via a tie rod 6 and a knuckle arm 7 that are connected to both ends of the rack shaft. The electrical motor 9 for giving steering assist force is supported by and fixed to the chassis 5. A control unit 11 drives the electrical motor 9 based on output from a torque sensor housed in the chassis 5.

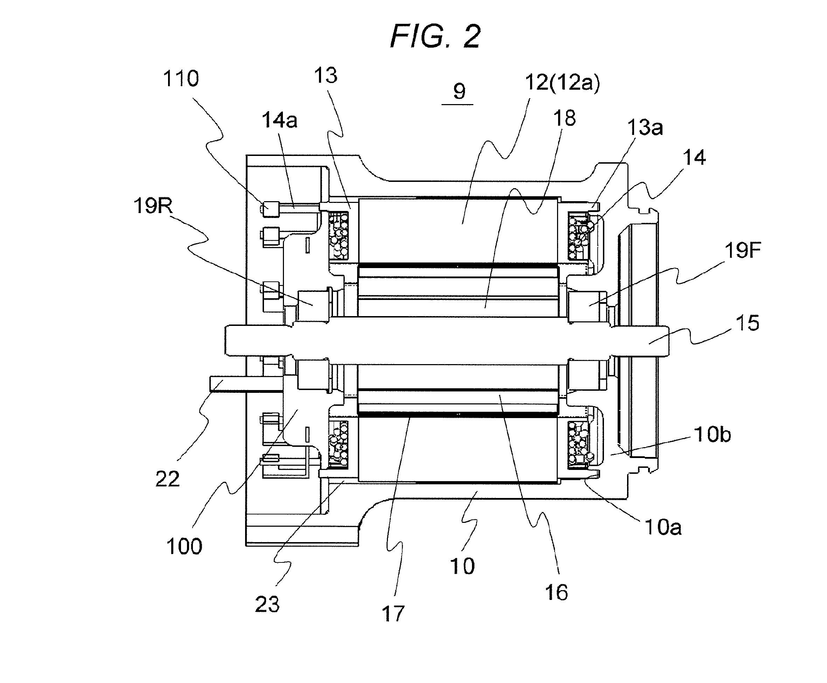

Fig. 2 is a sectional view of the electrical motor 9 in an axial direction. First, the overall configuration of the electrical motor 9 is described by using Fig. 2. A stator core 12 is press-fitted or shrink-fitted into an inner periphery side of the bottomed cylindrical chassis 10. The stator core 12, as described below, is configured to have a plurality of divided cores 12a. A bobbin 13 is installed in each of the divided cores 12a of the stator core 12. A coil 14 is wound around an outer periphery of the bobbin 13 in concentrated winding. In the figure, a busbar mold 100 provided with a busbar terminal 110 is arranged to the left of the stator core 12 provided with the bobbin 13. The busbar mold 100 is arranged so as to face the bobbin 13, and is fixed to the chassis 10. Note that a stator fixing ring 23 is provided for integrating a plurality of the divided cores 12a into a ring.

In the inner periphery side of the stator core 12, a rotor 18 having a shaft 15, a magnet 16, and a magnet cover 17 is provided. The rotor 18 is rotatably supported by a bearing 19F in the front and a bearing 19R in the rear thereof. The bearing 19F is held by a bottom 10b formed in one end in the axial direction of the chassis 10. The bearing 19R is held by the busbar mold 100 fixed to the other end of the chassis 10 in the axial direction.

A lead wire 14a of the coil 14 wound around the bobbin 13 (see Fig. 2) is connected to the busbar terminal 110 provided in the busbar mold 100. Furthermore, the busbar terminal 110 is wired so as to enable three-phase output of a connection in each phase, and to eventually provide three-phase output of UVW through an output terminal 22. Although not shown in the figure, the control unit 11, provided with an inverter for driving the electrical motor 9, a controller for the inverter, and the like, is fixed to the left of the chassis 10. The electrical motor 9 is rotated when electricity is supplied from the inverter to the output terminal 22 provided in the busbar mold 100.

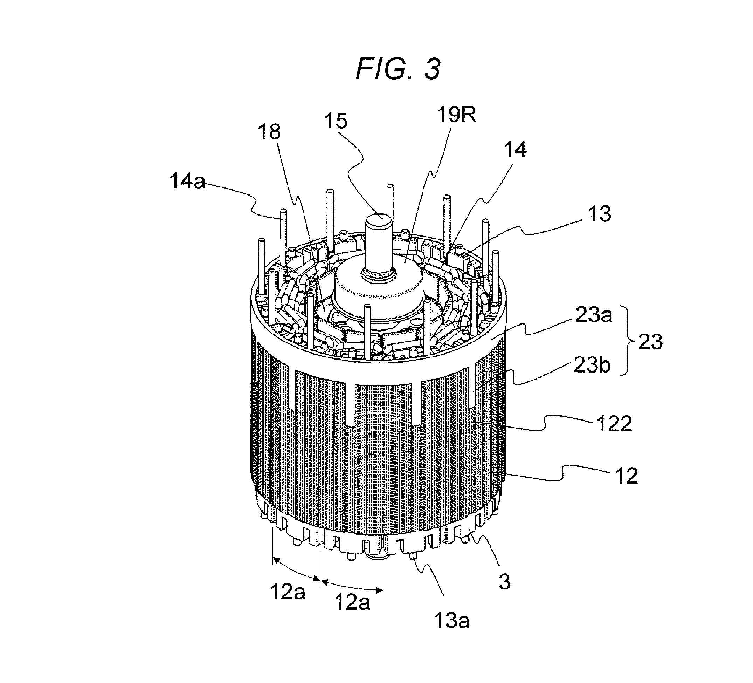

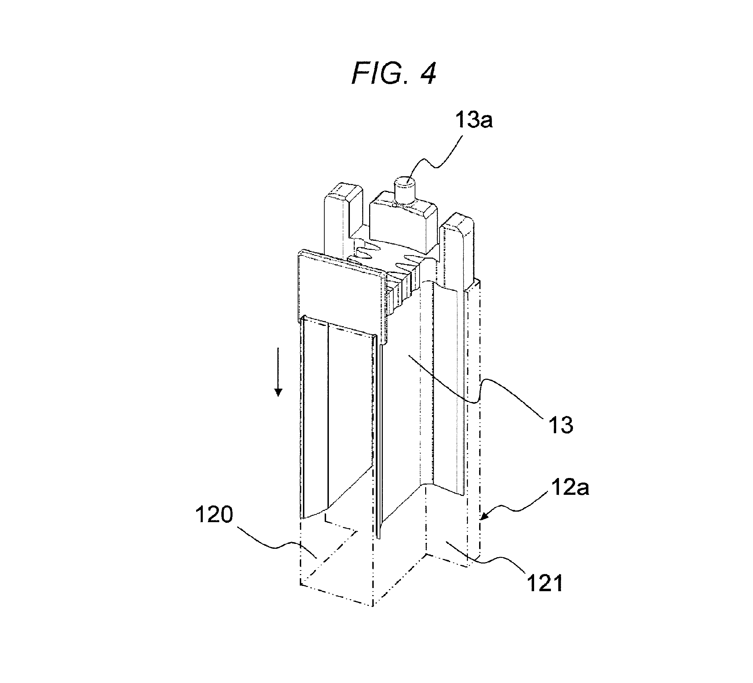

Fig. 3 is a perspective view of the stator core 12 and the rotor 18. The stator core 12 is configured to include a plurality of divided cores 12a, and includes twelve divided cores 12a in this embodiment. A pair of the bobbins 13, having a shape as illustrated in Fig. 4, is installed in each of the divided cores 12a on both sides thereof in the axial direction. The divided core 12a is a laminate of multiple T-shaped core sheet metals (for example, a magnetic steel sheet is used). The divided core 12a has a tooth 120 on the inner periphery side and a core back 121 on the outer periphery side.

In Fig. 4, one of a pair of the bobbins 13 is illustrated, and the divided core 12a (substantially a half in the axial direction) is partially shown with a long dashed double-short dashed line. A pair of the bobbins 13 is installed in the tooth 120 from the end surface side thereof in the axial direction, as shown with an arrow, so as to sandwich the tooth 120. Therefore, most of the peripheral surface of the tooth 120, around which the coil 14 is wound, is covered by the electrically-insulating bobbin 13. As a material for forming the bobbin 13, a resin such as polybutylene terephthalate (PBT) is commonly used.

In this embodiment, each tooth 120 is sandwiched between a pair of the uniformly-shaped bobbins 13 in the axial direction; however, it is also possible to fit a bobbin, which is formed of an upper portion and a lower portion as a single part, into each tooth 120 from the tip end side thereof. By using a two-part configuration as in Fig. 4, installation in the tooth 120 becomes easier, and by using a uniform shape, a cost reduction of the bobbin itself becomes possible.

As in Figs. 2 and 3, the coil 14 is wound around the tooth 120 multiple times via the bobbin 13. In other words, a concentrated winding structure is used in which one coil 14 is wounded around one tooth 120 in a concentrated manner. In each of the bobbins 13, an engaging projection 13a, which is projected from an end surface of the bobbin 13 in the axial direction, is formed. In an example shown in Fig. 4, the engaging projection 13a is formed as a cylindrical projection.

Each of the divided cores 12a, around which the coil 14 is wound, is arranged and integrated into a ring shape as in Fig. 3. In this embodiment, a stator fixing ring 23, a member structured to surround each of the divided cores 12a from an outer periphery, is used for integration; however, it is also possible to connect the outer periphery of the core back 121 by welding, for example. As in Fig. 3, a ring 23a and a plurality of legs 23b, extending from the ring 23a in the axial direction, are formed in the stator fixing ring 23. The legs 23b are provided in the same number as the number of the divided cores 12a. A groove 122 is formed along the axial direction in each of the divided cores 12a on the outer periphery thereof. A plurality of the divided cores 12a is integrated into one by each of the legs 23b engaging with each of the grooves 122.

The stator fixing ring 23 is formed either of a metal or a resin to be a single part. As in Fig. 2, the height (size in the axial direction) of the ring 23a of the stator fixing ring 23 is set so that an end surface in the axial direction of the stator fixing ring 23 is positioned at the same level or lower than an end surface in the axial direction of the bobbin 13, which is installed in the tooth 120. By setting as such, it is possible to use an open space between the busbar mold 100 and the stator core 12 effectively. Note that an outer diameter of the stator fixing ring 23 is set to be equal to an outer diameter of the stator core 12, and an outermost periphery surface of the stator fixing ring 23 and an outer periphery surface of the stator core 12 are arranged to be on the same surface. Accordingly, when the stator core 12 is shrink-fitted into the chassis 10, the stator fixing ring 23 is also held within the chassis 10.

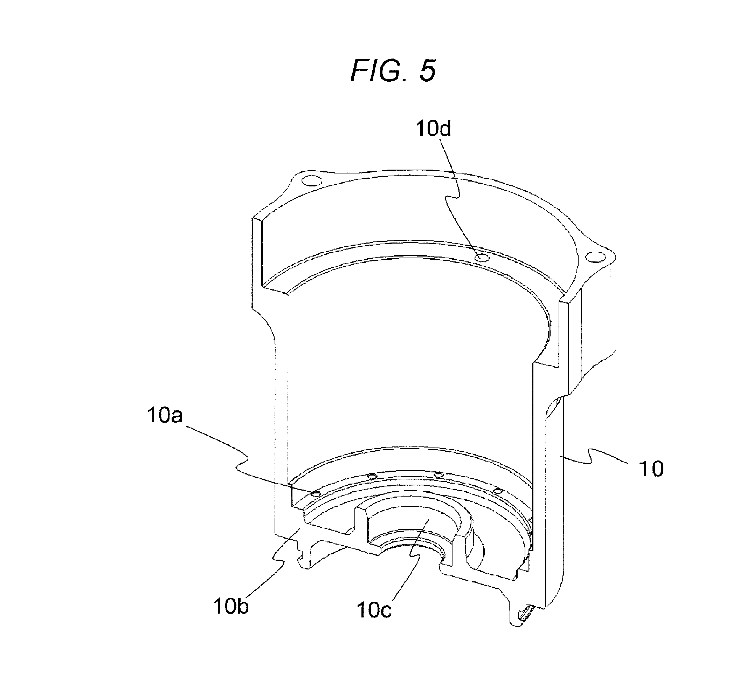

Fig. 5 is a perspective view of the chassis 10, in which the stator core 12 is housed, sectioned in half in an axial direction. The chassis 10 is a bottomed cylindrical casing, and is formed by die-casting of aluminum, for example. A bearing holding portion 10c for holding the bearing 19F is formed at a center of the bottom 10b of the chassis 10. A plurality of engaging holes 10a is formed in the bottom 10b at a part facing the bobbin 13 of the stator core 12. The number of the engaging holes 10a is the same as the number of the divided cores 12a. When the stator core 12 in Fig. 3 is shrink-fitted into the chassis 10, as in Fig. 2, the stator core 12 should be inserted into the chassis 10 so that the engaging projection 13a of the bobbin 13 engages with the engaging hole 10a.

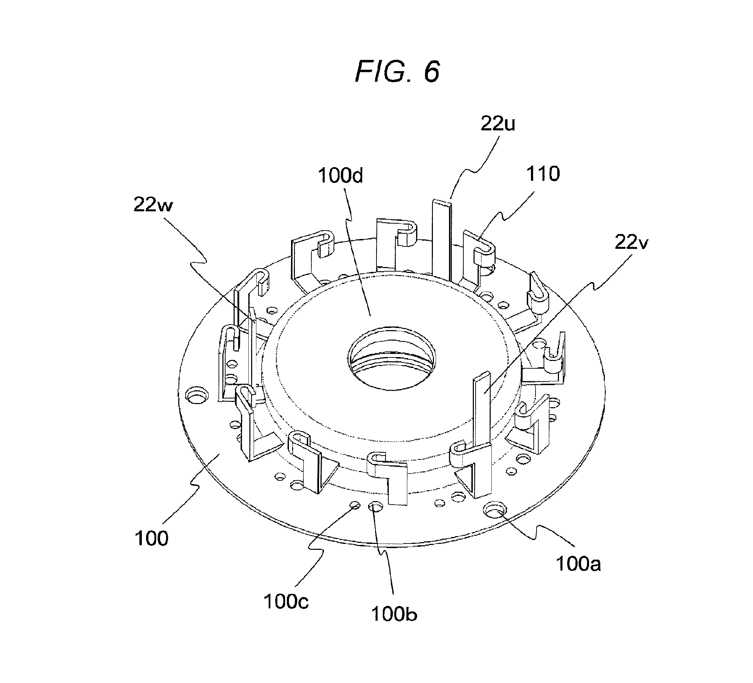

Fig. 6 is a perspective view of the busbar mold 100. In addition to the busbar terminal 110, the busbar mold 100 is provided with terminals 22u, 22v, and 22w, which are three-phase input terminals. In other words, the busbar mold 100 is equivalent to a terminal layout board that is molded from a resin and includes the busbar terminal 110 and other terminals. At the center of the disc-shaped busbar mold 100, a holding portion 100d for holding the bearing 19R is formed.

In the peripheral region of the busbar mold 100, a fixing hole 100a is provided for fixing the busbar mold 100 to the chassis 10 with a screw. There is also provided a coil through hole 100b for positioning the lead wire 14a of the coil 14 in relation to the busbar terminal 110, in the same number as the number of busbar terminals 110. Furthermore, an engaging hole 100c, to which the engaging projection 13a formed on the end-face of the bobbin 13 is inserted, is formed in the same number as the divided cores 12a.

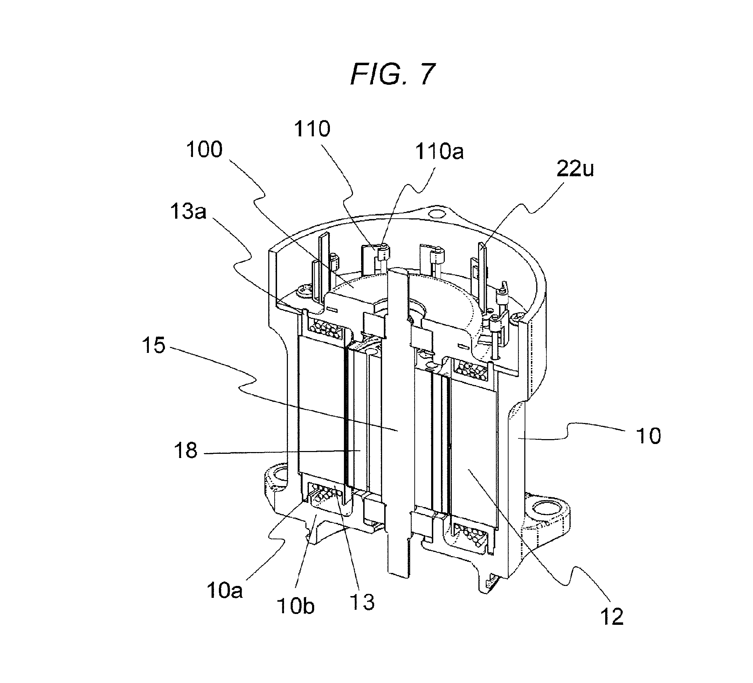

Fig. 7 is a sectional view of the electrical motor 9 that has been completely assembled and cut through the center in the axial direction. The rotor 18, which is integrally rotatable with the shaft 15, is provided at the center of the chassis 10, and the stator core 12 is arranged on the outer periphery side thereof via a space. The outer periphery surface of the stator core 12 is held by the cylindrical portion of the chassis 10 by using shrink-fit or press-fit. Below the stator core 12 in the figure, the bobbin 13, installed in the stator core 12 on an end surface side thereof facing the bottom 10b, has the engaging projection 13a that engages with the engaging hole 10a formed in the bottom 10b.

The busbar mold 100 is arranged above the stator core 12 (on the other side of the bottom 10b). In this arrangement, an engaging projection 13a of the bobbin 13 is inserted into an engaging hole 100c of the busbar mold 100. In other words, the engaging projection 13a functions as a positioning member for the busbar mold 100.

The busbar mold 100 is fixed to the chassis 10 with a screw. Note that by setting the size in the axial direction of the ring 23a so that the stator fixing ring 23 comes into contact with the underside of the busbar mold 100, when the busbar mold 100 is screwed, the stator core 12 is sandwiched between the bottom 10b of the chassis 10 and the busbar mold 100. Subsequently, the engaging projection 13a of the bobbin 13 is thermally caulked. By thermal caulking, not only is the engaging projection 13a inserted into the engaging hole 100c, but also an effect of restraining the stator core rotation is improved due to connection between the engaging projection 13a and the busbar mold 100. The lead wire 14a of the coil 14 is thermally caulked at a hook 110a provided at a tip end portion of the busbar terminal 110.

In the past, shrink-fit or press-fit has been performed to fix the stator core 12 to the chassis 10. The stator core 12 receives reaction force of torque generated when the electrical motor is rotated; however, interference with the chassis 10 is ensured so that receipt of the reaction force is not a problem under a normally-used temperature condition. Nevertheless, in the case of an on-vehicle electrical motor such as a power steering motor, the temperature of the electrical motor may easily become higher due to an influence of heat such as of an engine. In such a case, due to a difference in linear expansion coefficient, the interference between the stator core and the chassis may easily become loose, and the stator core 12 may be rotated against the chassis 10 by the reaction force of the torque.

In a first embodiment, no part dedicated for restraining the rotation is added, unlike the electrical motor described in JP 2011-67056 A. The engaging projections 13a are formed in end portions in the axial direction of the bobbin 13, provided from before. The engaging projections 13a are engaged with the engaging hole 10a of the chassis 10 and with the engaging hole 100c formed in the busbar mold 100. As a result, by this engagement structure, the rotation of the stator core 12 can be prevented in the case where an unexpected temperature rise occurs, and the interference between the stator core and the chassis becomes loose.

As a structure for restraining the rotation of the stator core against the chassis, besides a method of providing a dedicated member for restraining the rotation as in JP 2009-201235 A, for example, there have been known the following structures. That is, a structure in which a groove is formed along the circumferential direction in the inner periphery surface of the chassis, and another groove is formed along the axial direction in the outer periphery surface of the stator, and then an adhesive is flowed into these grooves (JP 2008-312347 A, for example), and a structure in which a fan-shaped projection is formed in an outer periphery surface of the stator, which projection is fitted into a fan-shaped recess formed in an inner periphery surface of the chassis (JP 2009-201235 A, for example).

In case of a method of using an adhesive, however, contamination may occur due to deterioration of the adhesive, which may increase no-load loss of the electrical motor. In case of a structure having a groove or a recess in the inner periphery surface of the chassis, due to a fitting structure, the surface needs to be machine processed, which takes time and efforts. In contrast, in a structure according to this embodiment, the originally-provided bobbin 13 is used. Thus, use of an adhesive or additional processing in the inner periphery surface of the chassis is not necessary, and an effect of restraining rotation can be obtained easily.

In the above described embodiment, the bobbin 13 is engaged with both the bottom 10b of the chassis 10 and the busbar mold 100, but a rotation prevention effect can still be obtained in a structure of engaging the bobbin 13 on the chassis side only. Note that by engaging the bobbin 13 also with the busbar mold 100, and providing a rotation prevention mechanism at both ends in the axial direction by sandwiching the stator core 12, in addition to an improved rotation prevention effect, it is also possible to obtain an effect of restraining dismantling of the stator core 12 assembled in a ring shape, due to external force or a vibration. In addition, such effects can be further enhanced by thermal caulking of the engaging projection 13a.

When fixing the stator core 12 to the chassis 10 by shrink-fit or the like, it is necessary to align relative position between the lead wire 14a of the coil 14 and the busbar terminal 110 of the busbar mold 100. Therefore, positioning of the stator core 12 relative to the chassis 10 also becomes important. According to this embodiment, when the stator core 12 is inserted into the chassis 10, positioning of the stator core 12 can be achieved by engaging the engaging projection 13a of the bobbin 13 with the engaging hole 100c of the chassis 10. Furthermore, when the busbar mold 100 is fixed to the chassis 10, positioning of the busbar mold 100 can be achieved easily by inserting the engaging projection 13a of the bobbin 13 into the engaging hole 100c.

The stator fixing ring 23 is a member for integrating a plurality of divided cores 12a into a ring shape. In this embodiment, the stator fixing ring 23 further functions as a rotation restraint member in the case where the stator core 12 becomes loose against the chassis 10. Therefore, the size of the ring 23a of the stator fixing ring 23 in the axial direction should be set so that the ring 23a is sandwiched between the stator core 12 and the busbar mold 100 when the busbar mold 100 is screwed to the chassis 10.

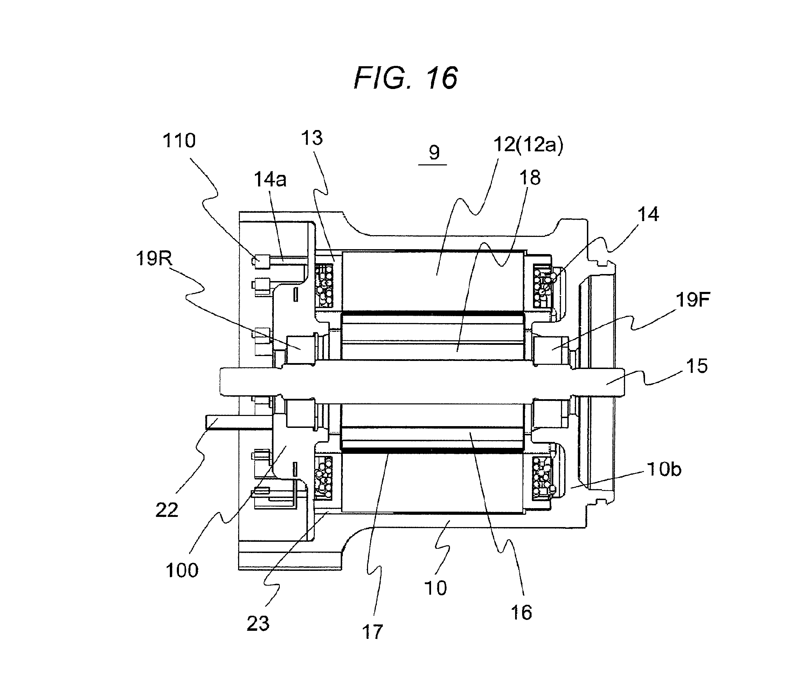

As a result, in the case where the fixing of the stator core 12 becomes loose and the stator core 12 begins to rotate, the rotation is restrained by frictional force between the ring 23a and the busbar mold 100. Therefore, even in the case where the bobbin 13 is configured not to be provided with the engaging projection 13a as in Fig. 16, the rotation restraint effect can be obtained by the stator fixing ring 23 alone.

Furthermore, since the stator core 12 is fixed by being sandwiched between the busbar mold 100 and the bottom 10b of the chassis 10, the ring-shaped stator core 12 can be held firmly. Accordingly, the interference may be increased in the shrink-fit between the chassis 10 and the stator core 12, or an area of welding of the divided cores 12a may be decreased.

In the above-described embodiment, the number of the engaging projections 13a provided to one of the end portions in the axial direction of the stator core 12, and the number of the engaging holes 10a on the side of the chassis 10 are set to be equal; however, the numbers may also be different. In such a case, an intermediate member may be arranged between the stator core 12 and the chassis 10. In the intermediate member, in a surface facing the stator core 12, an engaging hole may be formed in the same number as the engaging projections 13a, and in a surface facing the chassis 10, an engaging projection may be formed in the same number as the engaging holes 10a. In such a configuration, the stator core 12 divided into a different number can be used with the same chassis 10.

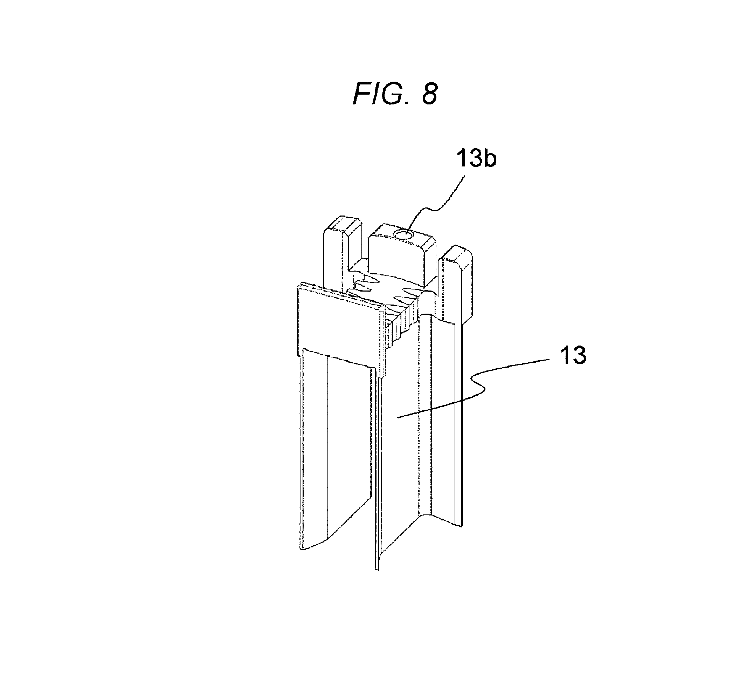

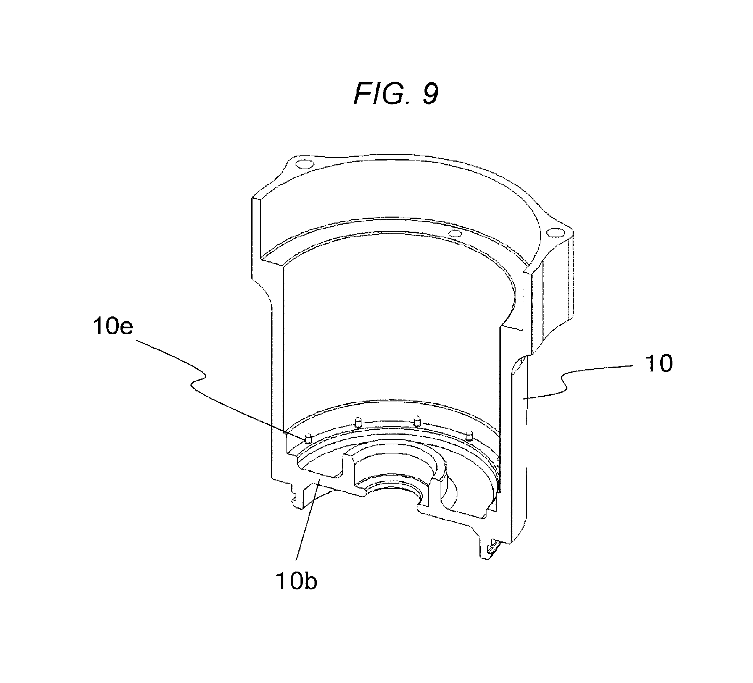

Note that in the above-described embodiment, a projection (engaging projection 13a) is formed on the side of the bobbin 13 as an engaging portion, and a hole (engaging holes 10a, 100c) is formed in the chassis 10 and the busbar mold 100, but the relationship may be reversed. In other words, as in Fig. 8, an engaging hole 13b may be formed in the bobbin 13, and as in Fig. 9, an engaging projection 10e may be formed on the side of the chassis 10, whereby the engaging hole 13b and the engaging projection 10e are engaged with each other. In such a configuration, the same effect as in the above-described embodiment may be obtained.

### Second embodiment

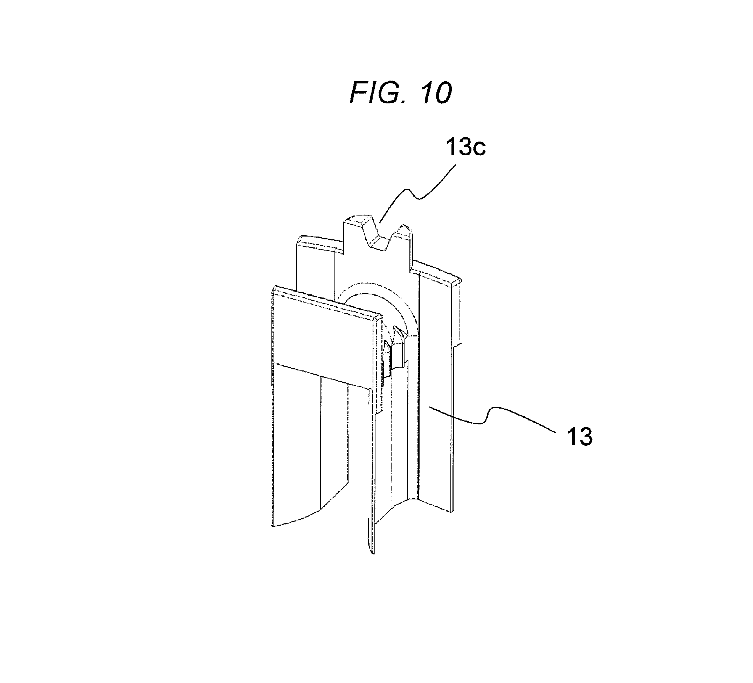

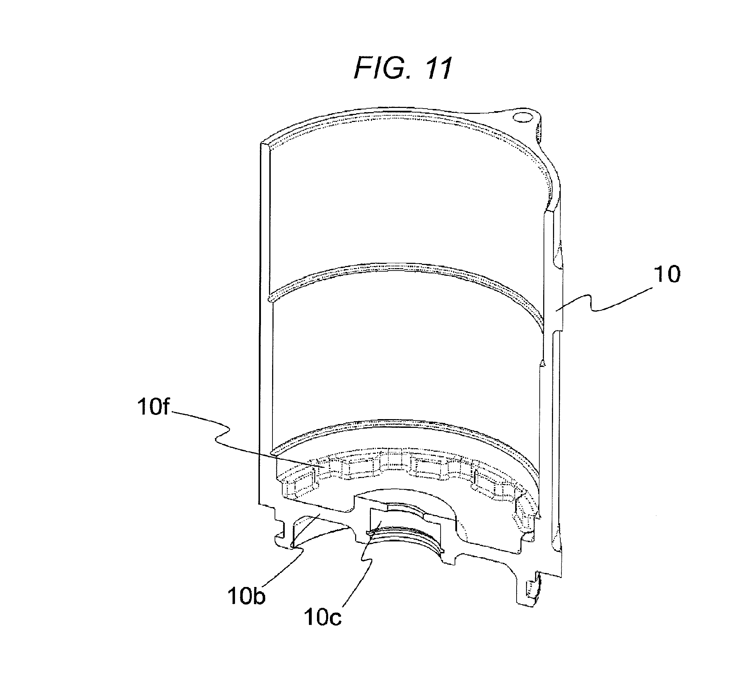

Figs. 10 to 15 are views illustrating a second embodiment of the present invention. Figs. 10 and 11 are views of an engaging portion according to this embodiment. As in Fig. 10, an engaging portion 13c, which is formed in the end portion in the axial direction of the bobbin 13, is a V-shaped recess formed in a projection that is wider in a circumferential direction. On the other hand, as in Fig. 11, an engaging portion 10f engaged with an engaging portion 13c is formed in the chassis 10 in the same number as the divided cores 12a. In the inner periphery surface of the chassis 10, a recess and a projection are formed along the circumferential direction, and the recess becomes the engaging portion 10f.

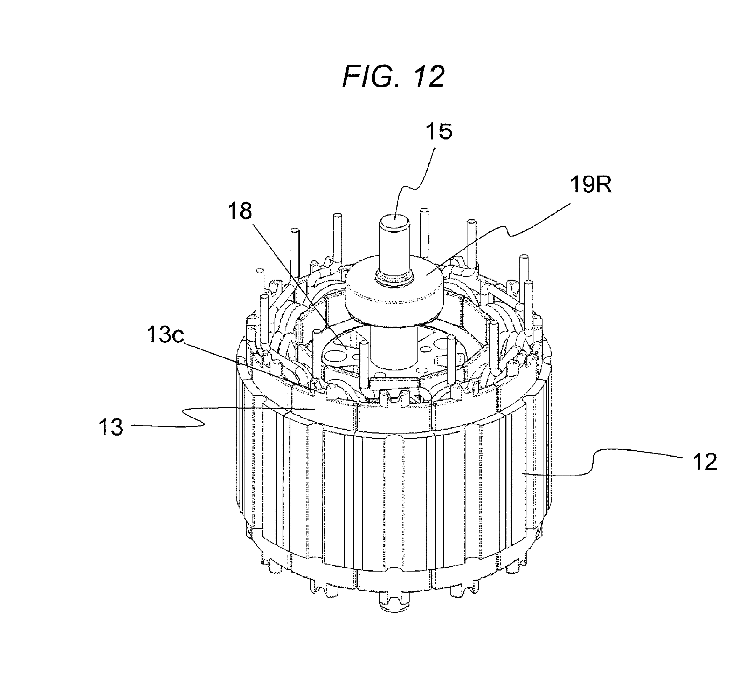

Fig. 12 is a perspective view of the rotor 18 and the stator core 12 having the bobbin 13 installed therein as in Fig.10, configured to be a.10-pole 12-slot two-parallel winding structure. Regarding the lead wire of the coil 14, the wire is led out straightly upward at the beginning of the winding, but at the end of the winding, the wire stands up from the central part of an in-phase winding, and thus the lead out is unstable. Therefore, the lead wire at the end of the winding is bent once at the coil end, and is hardened with a varnish to prevent the lead wire from becoming unstable.

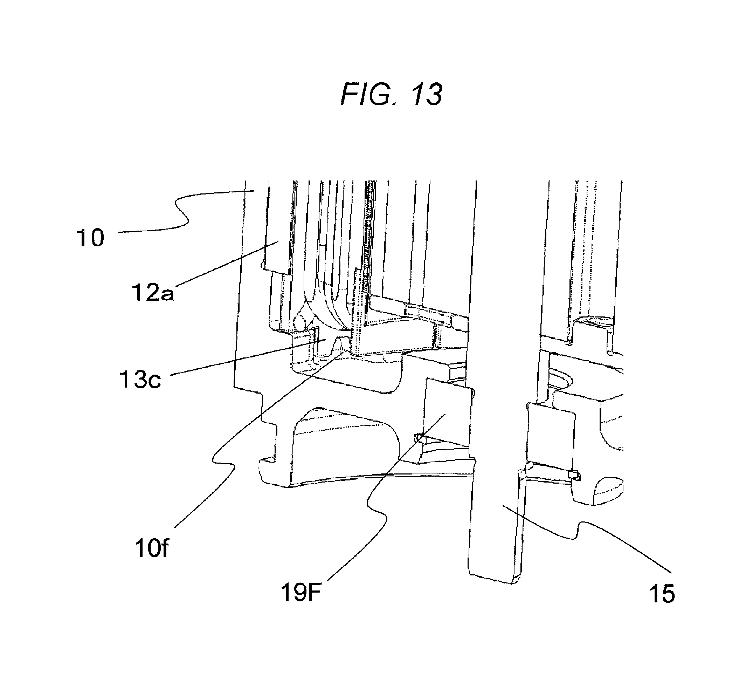

Fig. 13 is a view illustrating the engaging state between the engaging portion 13c and the engaging portion 10f on the side of the chassis 10. In order to enable formation of the chassis 10 in die-casting, the engaging portion 10f is formed with a mold. The engaging portion 13c, which is formed in the end portion of the bobbin 13 and is wider in the circumferential direction, is fitted into the engaging portion 10f, which is a recess formed in the chassis 10. By the engaging portion 13c fitting into the engaging portion 10f of the chassis 10 in this manner, the rotation of the stator core 12 against the chassis 10 can be prevented.

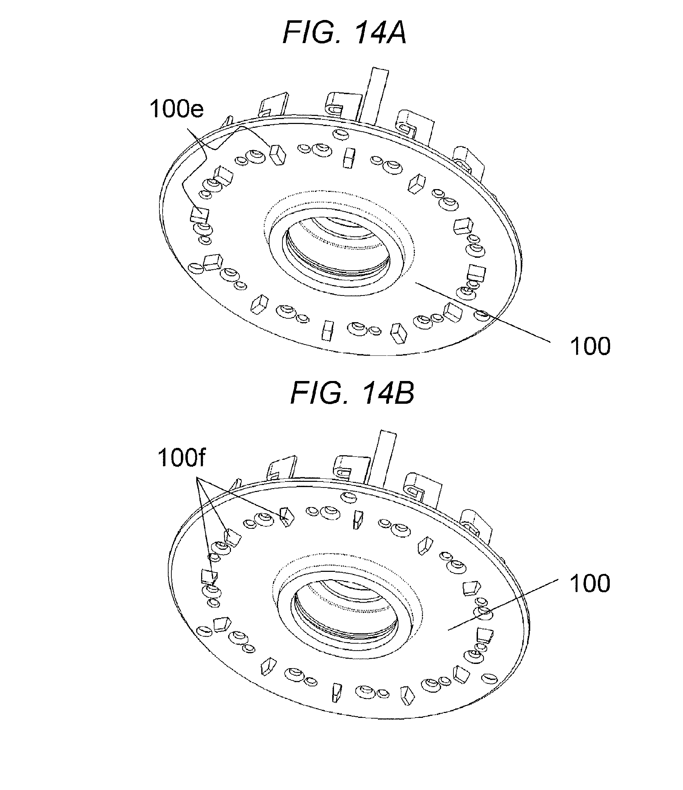

Note that as an engaging portion on the side of the busbar mold 100, an engaging portion is provided in a shape such as in Figs. 14A and 14B. In the case of an engaging portion 100e in Fig. 14A, an engagement structure is such that a recess and a projection are formed in the undersurface of the busbar mold 100 on the circumference thereof, and the engaging portion 13c of the bobbin 13 is fitted into the recess. Furthermore, in Fig. 14B, a plurality of trapezoidal projections 100f is formed on the circumference. Then, an engagement structure is such that the projection 100f is fitted into a V-shaped recess formed in the engaging portion 13c of the bobbin 13.

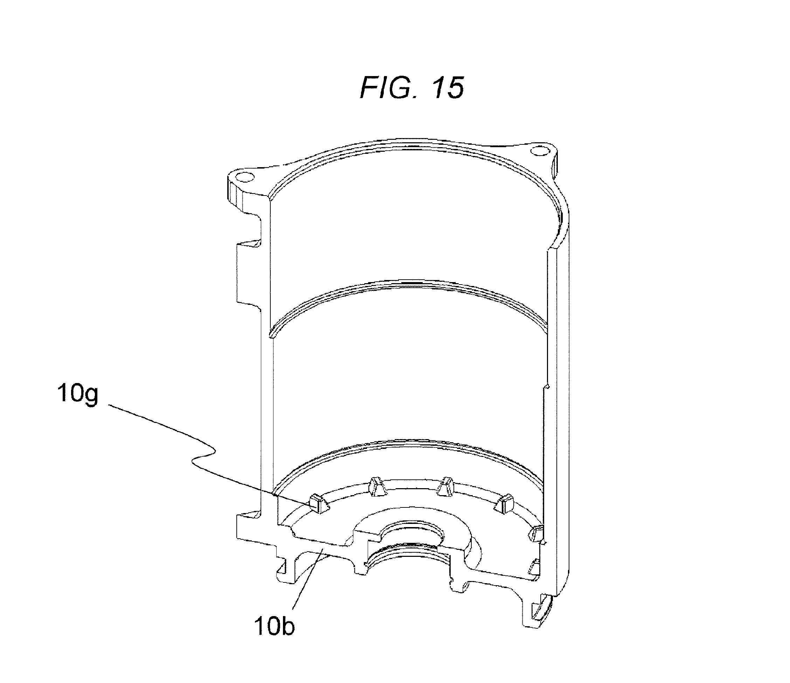

Fig. 15 is another exemplary view of the engaging portion on the side of the chassis 10. In the bottom 10b, a plurality of trapezoidal projections 10g, to be fitted into a V-shaped recess of the engaging portion 13c, is formed and arranged on the circumference at a position facing the engaging portion 13c of the bobbin 13. By these engaging projections 10g fitting into the V-shaped recesses of the facing engaging portions 13c, respectively, the rotation of the stator core 12 against the chassis 10 is prevented.

In this embodiment as well, the engaging portion 13c is formed in the end portions in the axial direction of the bobbin 13, provided from before, and the engaging portion 13c is engaged with an engaging portion (10f, 10g) of the chassis 10 and an engaging portion (100e, 100f) formed in the undersurface of the busbar mold 100. Therefore, as in the above-described first embodiment, the rotation of the stator core 12 can be prevented even in the case where the interference is decreased.

Furthermore, the engaging portion 10f or 10g formed in the chassis 10 has a recess-and-projection structure, and thus can be formed at the same time as the chassis 10 is molded. Therefore, unlike the configuration of forming the engaging hole 10a in a bottom 10b of the chassis 10 in Fig. 5, it is not necessary to form a hole by machine processing, whereby cost-saving becomes possible.

Furthermore, the engaging portion 13c formed at the end portion in the axial direction of the bobbin 13 is not cylindrical as the engaging projection 13a in Fig. 4, but is a projection wider in the circumferential direction. Since the bobbin 13 is commonly formed of resin, in order to provide a rotation restraint function by resisting rotational torque of the stator core 12, it is preferable to increase the cross-sectional area in order to improve strength such as with the engaging portion 13c.

As described above, the electrical motor 9, which is an on-vehicle rotary electric machine, includes as in Fig. 2: the rotor 18; the cylindrical stator core 12 arranged so as to surround the periphery of the rotor 18 via a space, and having a plurality of the teeth 120 formed in an inner periphery thereof; the bobbin 13 installed in each of a plurality of the teeth 120; the coil 14 wound around each of the bobbins 13 installed in the tooth 120; the chassis 10 having the bottom 10b faced with one of the end portions in the axial direction of the stator core 12, and holding the outer periphery of the stator core 12; and the busbar mold 100, or a terminal layout board, provided with the busbar terminal 110 to which the lead wire 14a of the coil 14 is connected. The engaging hole is formed at least in either the bottom 10b or the busbar mold 100 at a position facing the bobbin 13, and the engaging projection 13a that engages with the engaging hole is formed in an opposing part that faces the engaging hole in the bobbin 13. Note that in the exemplary view in Fig. 2, a pair of the bobbins 13 installed in the tooth 120 constitutes the bobbin for the tooth 120.

Therefore, even in the case where fixing between the chassis 10 and the stator core 12 becomes loose due to a temperature rise or the like, rotation of the stator core 12 can be restrained as the engaging projection 13a and the engaging hole are engaged. Furthermore, the rotation restraint effect can be further improved by engaging the engaging projections 13a of the bobbin 13, provided to both ends in the axial direction of the stator core 12, with the engaging hole of the chassis 10 and the busbar mold 100. Furthermore, when the stator core 12 is assembled to the chassis 10, positioning of the stator core 12 can be easily made by engaging the engaging projection 13a with the engaging hole.

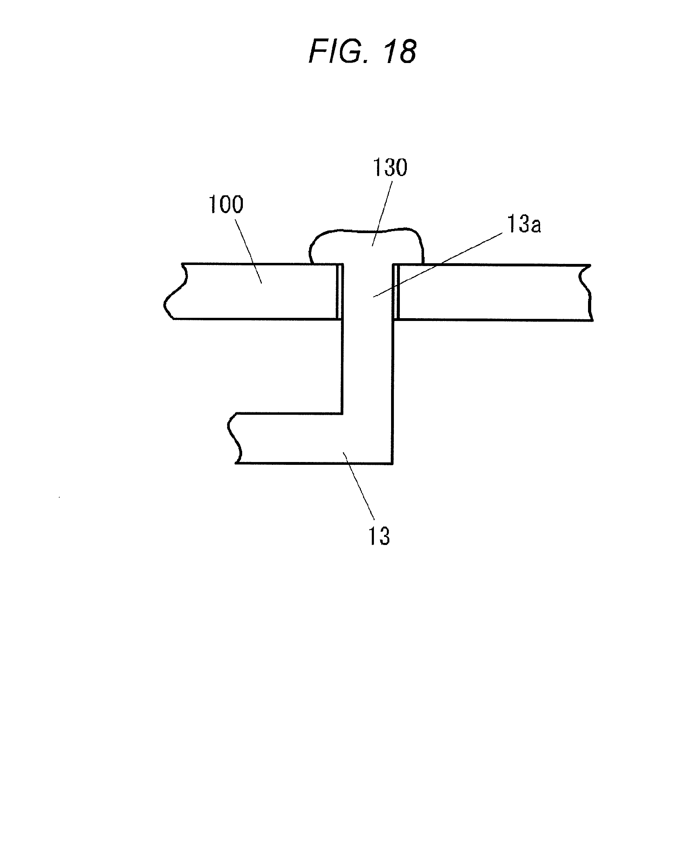

Furthermore, the bobbin 13 is formed of resin. The engaging projection 13a penetrates through the engaging hole 100c of the busbar mold 100, and a portion that projects out to the other side of the busbar mold 100 is thermally caulked. As in Fig. 18, a thermally caulked portion 130, which reaches a busbar mold region around the engaging hole 100c, is formed. By thermally caulking the engaging projection 13a in this manner, in addition to an improved rotation prevention effect, it is also possible to obtain an effect of restraining dismantling of the stator core 12 assembled in a ring shape, due to external force or a vibration.

Furthermore, the electrical motor 9 further includes a stator fixing ring 23, which is arranged in a gap in the axial direction between the busbar mold 100 and the stator core 12, integrally holds a plurality of the divided cores 12a arranged in a ring shape, and is sandwiched between the busbar mold 100 and the stator core 12. The stator fixing ring 23 and the stator core 12 may be sandwiched between the bottom 10b of the chassis 10 and the busbar mold 100. In such a configuration, even in the case where the fixing of the stator core 12 becomes loose and the stator core 12 begins to rotate, the rotation restraint effect is further enhanced by friction force between the stator fixing ring 23 and the busbar mold 100. Therefore, even in the case where the bobbin 13 is configured not to be provided with the engaging projection 13a, the rotation restraint effect can be obtained by the stator fixing ring 23 alone.

Furthermore, the electric power steering system may include: a steering mechanism for transmitting the steering operation of the steering wheel to the steered wheel; and the above-described on-vehicle electrical motor 9, which gives the steering assist force to the steering mechanism. In the electric power steering system, the electrical motor 9 is provided in the lower part of an engine room, whereby it may be easily exposed to a high temperature environment. Therefore, by using the above-described electrical motor 9 having a high rotation restrain effect, a highly-reliable electric power steering system can be obtained.

Note that each of the above-described embodiments may be used alone or combined, since an effect of each embodiment may be obtained alone or in synergy. An effect of each embodiment may be obtained either alone or in synergy. Furthermore, note that the above descriptions are only exemplary. Interpretation of the invention is neither limited nor bound by a correlation between a description in the above embodiments and a description in the claims.

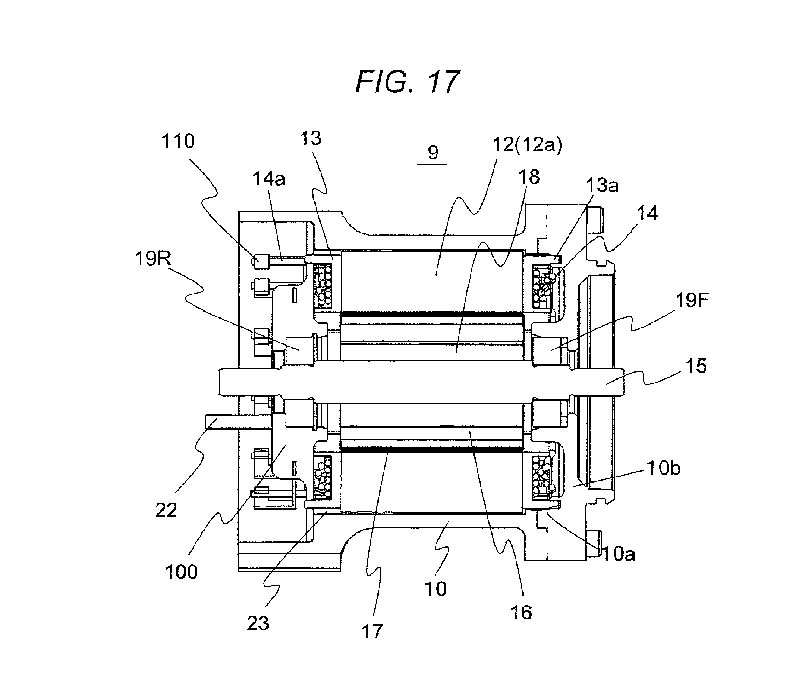

For example, the stator core 12 may be configured to have either a divided core structure or an integral structure, as long as the bobbin 13 is provided. Furthermore, in the above-described embodiments, a plurality of the divided cores 12a is integrated by using the stator fixing ring 23 or by welding, but it is also possible to configure a plurality of the divided cores 12a to be grasped collectively by a jig and assembled into the chassis 10. The chassis 10 is a bottomed cylindrical chassis, but it may also be configured as the cylindrical chassis 10 having a bottom 10b, a separate part, fixed with a bolt as in Fig. 17.

In the above-described embodiments, an electric power steering system has been given as an example; however, an on-vehicle rotary electric machine according to the embodiments is also applicable to an oil circulation motor of a transmission or an engine starter motor.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. An on-vehicle rotary electric machine, comprising:
a rotor (18);
a stator core (12) arranged so as to surround a periphery of the rotor (18) via a space;
a bobbin (13) installed in each of a plurality of teeth (120);
a stator coil (14) wound around each of the bobbins (13) installed in the teeth (120);
a bottomed cylindrical chassis (10) having a bottom (10b) faced with one of end portions in the axial direction of the stator core (12), and holding an outer periphery of the stator core; and
a terminal layout board provided with a terminal to which a lead wire of the stator coil is connected, arranged to face the other end portion in the axial direction of the stator core (12).

2. The on-vehicle rotary electric machine according to claim 1, wherein
the stator core (12) is a cylindrical stator core (12) having a plurality of teeth (120) formed in an inner periphery thereof;
the terminal layout board being fixed to the chassis (10), wherein
a first engaging portion is formed at least in either the bottom (10b) or the terminal layout board at a position facing the bobbin (13), and
a second engaging portion that engages with the first engaging portion is formed in an opposing part that faces the first engaging portion in the bobbin (13).

3. The on-vehicle rotary electric machine according to claim 2, wherein
the first engaging portion of the terminal layout board is a hole (10a) that passes therethrough,
the bobbin (13) is formed of resin, and as the second engaging portion, a projection (13a) to be inserted through the hole (10a) so as to project out to the other side of the terminal layout board is formed, and
a thermally caulked portion, which is thermally caulked and reaching a region around the hole (10a) of the terminal layout board, is formed in a part of the projection that projects out to the other side of the terminal layout board.

4. The on-vehicle rotary electric machine according to at least one of claims 1 to 3, further comprising:
a divided stator core holding ring (23), which is arranged in a gap in the axial direction between the terminal layout board and the stator core (12), integrally holds a plurality of the divided stator cores (12) arranged in a ring shape, and is sandwiched between the terminal layout board and the stator core (12), wherein
the terminal layout board is fixed to the chassis (10) so as to sandwich the divided stator core holding ring (23) and the stator core (12) between the bottom (10b) of the chassis (10) and the terminal layout board.

5. The on-vehicle rotary electric machine according to claim 1, wherein,
the stator core (12) includes a plurality of divided stator cores (12a) having a tooth (120) formed in an inner periphery thereof;
the on-vehicle rotary electric machine further comprising:
a divided stator core holding ring (23) that integrally holds the plurality of divided stator cores (12a) arranged in a ring shape, and is sandwiched between the terminal layout board and the stator core (12), wherein
the terminal layout board is fixed to the chassis (10) so as to sandwich the divided stator core holding ring (23) and the stator core (12) between the bottom (10b) of the chassis (10) and the terminal layout board.

6. The on-vehicle rotary electric machine according to at least one of claims 1 to 5, wherein said rotary electric machine is provided for an electric power steering system, comprising:
a steering mechanism for transmitting steering operation of a steering wheel (SW) to a steered wheel (8); wherein
steering assist force is given to the steering mechanism by the on-vehicle rotary electric machine,(9).
